# EUROPÄISCHE PATENTSCHRIFT

(11) **EP 2 823 945 B1**
(45) Veröffentlichungstag und Bekanntmachung des Hinweises auf die Patenterteilung: **12.10.2016**
(21) Anmeldenummer: 14175281.6
(22) Anmeldetag: 01.07.2014
(51) Int. Cl.: B29B 17/02, G01N 21/359

(54) **Verfahren und Vorrichtung zur Aufbereitung von Kunststoffabfällen**
Method and device for recovery of plastic waste
Procédé et dispositif destinés à la récupération de déchets en plastique

(30) Priorität: 10.07.2013 DE 102013213478
(43) Veröffentlichungstag der Anmeldung: 14.01.2015
(73) Patentinhaber: mtm plastics GmbH, 99759 Niedergebra (DE)
(72) Erfinder: Peters, Tobias, 37339 Gernrode (DE); Böttner, Ralf, 99706 Sondershausen (DE); Meyer, Torsten, 99755 Ellrich OT Rothesütte (DE); Dr. Scriba, Michael, 95445 Bayreuth (DE)
(74) Vertreter: Maikowski & Ninnemann Patentanwälte Partnerschaft mbB

(56) Entgegenhaltungen:
- GB-A- 2 465 839
- GB-A- 2 493 600
- US-B1- 6 460 788
- "KUNSTSTOFF - SORTENTRENNUNG - ABER WIE ?", KUNSTSTOFFBERATER, 201975 1, Bd. 38, Nr. 11, 1. November 1993 (1993-11-01), Seiten 5,36-38, XP000413621, ISSN: 0172-6374

## Beschreibung

Die Erfindung betrifft ein Verfahren und eine Vorrichtung zur Trennung und Rückgewinnung spezieller Kunststoffe, nämlich der Polyolefine Polypropylen und Polyethylen, aus den anfallenden Kunststoffabfällen. Das erfindungsgemäße Verfahren und die erfindungsgemäße Vorrichtung sind insbesondere zur Farbtrennung und Rückgewinnung der sortenreinen Kunststoffe in verschiedenen Farben geeignet.

Es sind die verschiedensten Methoden der Kunststoffrückgewinnung aus kunststoffreichen Abprodukten, wie Verpackung, Folien, Verbundstoffen, Hohlkörpern bekannt. Dabei handelt es sich um Verbrauchsabfälle, die vorwiegend im häuslichen Bereich im Hausmüll anfallen. In vielen Ländern weltweit werden diese Kunststoffabfälle durch getrennte Sammlung aus dem Hausmüll wiedergewonnen und der Wiederaufbereitung zugeführt. Weniger Beachtung wurde bislang Kunststoffabfällen geschenkt, die im kommunalen und industriellen Bereich anfallen. Dazu gehören die so genannten Hartkunststoffe, wie Kisten und Behälter, Spielzeug, Industrieverpackungen, Rohre, Haushaltswaren, Gartenmöbel, medizinische Verpackungen und Geräte, Koffer und Küchengeräte.

Polyolefine ist der Sammelbegriff für Kunststoffarten, die verschiedene Polyethylene, wie LDPE (Low Density Polyethylen), LLDP (Linear Low Density Polyethylen) und HDPE (High Density Polyethylen) und Polypropylen enthalten. Zusammen bilden sie über 47 % (11,2 Mio Tonnen) des Gesamtjahresverbrauches an Kunststoff von 24,1 Mio Tonnen in Europa.

Die Polyolefine Polyethylen (PE) und Polypropylen (PP) weisen einen annähernd gleichen Dichtebereich auf, wodurch die sortenreine Rezyklisierung der beiden Kunststoffe bislang mit großen Schwierigkeiten und einem hohen Aufwand verbunden war.

Nach dem Stand der Technik gibt es folgende Möglichkeiten zur Trennung von Kunststoffgemischen, die PE und PP enthalten:

### 1. Handsortierung

Diese Methode ist sehr lohnintensiv und daher auch unwirtschaftlich.

### 2. Sortierung nach der Dichte

Verfahren zur Dichtetrennung mit Wasser werden erfolgreich dazu eingesetzt, um Polypropylen und Polyethylen von anderen Kunststoffen zu trennen. Jedoch konnten die beiden Kunststoffe PP und PE auf Grund ihrer ähnlichen Dichten mit diesem Verfahren bislang nicht erfolgreich voneinander getrennt werden.

In der US 6 460 788 B1 wird ein Verfahren offenbart, bei dem eine Mischung von Kunststoffen in beliebiger Reihenfolge zerkleinert, mechanisch nach der Größe sortiert, gereinigt und sortenrein getrennt wird. Die Trennung der Kunststoffsorten erfolgt dabei mit Hilfe der Dichtetrennung.

In der GB 2 465 839 A wird ebenfalls ein Verfahren zur sortenreinen Trennung von Kunststoffgemischen offenbart. Dieses Verfahren umfasst die Zerkleinerung, die Abtrennung der gewünschten Kunststofffraktionen, die Reinigung und Trocknung sowie die Granulierung zur Weiterverarbeitung. Die sortenreine Trennung der Kunststoffsorten erfolgt in diesem Verfahren in zwei Schritten, zuerst mit Hilfe der Dichtetrennung und anschließend optional nach der Trocknung der Kunststoffmischung mittels Nah-Infrarot Spektroskopie. Eine Hell-Dunkel Sortierung wird in diesem Verfahren nicht angewendet.

### 3. Elektrostatische Trennverfahren

In der WO 93/03852 wird ein Verfahren zur Trennung von Kunststoffgemengen in einem Freifallschneider mittels triboelektrischer Aufladung beschrieben, wobei das Kunststoffgemenge einer Oberflächenbehandlung mit Mineralsäure oder Alkalilauge unterworfen wird und danach eine Temperaturbehandlung des Kunststoffgemenges bei 70 - 100 °C über einer Zeitraum von mindestens 5 Min. erfolgt. Weiterhin wird dem so vorbehandelten Kunststoffgemenge eine bestimmte Menge Fettsäure zugegeben, um eine unterschiedliche triboelektrische Aufladung der einzelnen Kunststoffarten zu erreichen. Diese Methode weist einige Nachteile auf, wie den hohen energetischen Aufwand für die Temperaturbehandlung und die Entstehung von größeren Mengen an Abwässern, die Alkalilauge oder Mineralsäure und Fettsäure enthalten, die wiederum einer gesonderten Abwasseraufbereitung zugeführt werden müssen.

Die Schwierigkeiten, die beim Verwerten von vermischten und verschmutzten Kunststoffabfällen auftreten, werden in einer Veröffentlichung in der Zeitschrift "Kunststoffberater" diskutiert ("Kunststoff-Sortentrennung-aber wie?, Kunststoffberater, 2019751, Bd.38, Nr.11, (1993) ISSN: 0172-6374, XP413621). Unterschiedliche analytische Verfahren werden in diesem Artikel vorgeschlagen um im Vergleich zum Dichtetrennverfahren eine größere Sortenreinheit beim Trennen zu erzielen. Das größte Potential wird dabei der NahInfrarot Spektroskopie zugesprochen.

Der Erfindung liegt daher die Aufgabe zu Grunde, ein Verfahren zur Trennung von Kunststoffarten, die ähnliche Dichten aufweisen, derart weiterzuentwickeln, dass die Trennung solcher Kunststoffarten in sortenreiner Form ermöglicht wird.

Die Aufgabe wird erfindungsgemäß durch die Bereitstellung eines Verfahrens nach Anspruch 1 gelöst.

Das erfindungsgemäße Verfahren ist für die Trennung von PE und PP mit einem hohen Reinheitsgrad der jeweiligen Kunststoffart geeignet. Zur Bereitstellung der Polyolefine aus den anfallenden Kunststoffabfällen, die PE und PP als Gemisch enthalten, kann jedes herkömmliche Verfahren verwendet werden. Besonders geeignet ist zum Beispiel ein Verfahren zur Gewinnung der Polyolefine aus Kunststoffgemischen mittels Dichtetrennung in Flüssigkeiten. Bei diesem Verfahren wird das anfallende Kunststoffgemisch zerkleinert, anschließend mehr oder weniger von anhaftendem Schmutz, Störstoffen und Metallteilen befreit, mit dem Trennmedium vermischt und dann der eigentlichen Trennung zugeführt. Bei der Abtrennung von Polyolefinen aus dem anfallenden Kunststoffgemisch wird mit Wasser als Trennmittel gearbeitet. Dabei werden die Polyolefine mit einer Dichte <1 als Schwimmfraktion, die anderen Kunststoffe und Sonstiges als Sinkfraktion und das Trennmittel als dritte Fraktion erhalten. Das Trennmittel kann im Kreislauf zurückgeleitet werden.

In herkömmlichen Verfahren zur Dichtetrennung von Kunststoffen werden die abgetrennten Störstoffe, Metallteile und der Schmutz entsorgt. In diesem Störstoffgemisch können jedoch noch große und schwere Kunststoffteile der gewünschten Kunststoffarten enthalten sein, die bei der Entsorgung verloren gehen. Im erfindungsgemäßen Verfahren ist deshalb vorzugsweise ein zusätzlicher Trennschritt umfasst, in dem mittels eines Nah-Infrarot Trenners die in dem Störstoffgemisch noch enthaltenen gewünschten Kunststoffarten zurückgewonnen und in den nachfolgenden Prozess überführt werden. Damit können Verluste an den gewünschten Kunststoffarten bereits in diesem Verfahrensschritt minimiert werden.

Bei der Zerkleinerung der anfallenden Abprodukte entstehen üblicherweise Kunststoffteilchen, die eine Größe von 1-120 mm aufweisen. Um optimale Trennergebnisse in den nachfolgenden Verfahrensschritten zu erreichen, müssen die Kunststoffteilchen nachzerkleinert werden. Dies geschieht in einem oder mehreren Nachzerkleinerern, in denen die Kunststoffteilchen weiter bis auf eine Größe von 1 - 25 mm zerkleinert werden. Die so zerkleinerten Kunststoffteilchen werden in einem sich anschließenden Reinigungsschritt weiter gereinigt und mittels so genannter 3-Phasen-Zentrifugen aus dem Reinigungsmedium abgetrennt. Im erfindungsgemäßen Verfahren ist das bevorzugte Reinigungsmedium Wasser.

Das vor der Nachzerkleinerung anfallende vorbehandelte Kunststoffmaterial weist eine nicht einheitliche Qualität auf. Noch anhaftende Schmutzpartikel und andere Störstoffe erschweren eine saubere Dichteabtrennung und vermindern die Ausbeute. In einer weiteren bevorzugten Ausführungsform des Erfindungsgemäßen Verfahrens wird das vorbehandelte Material deshalb vor der Nachzerkleinerung mechanisch homogenisiert und von anhaftenden Schmutzpartikeln befreit. Ein Verfahren und eine Vorrichtung zur Durchführung dieser Homogenisierung sind unter anderem aus EP 2 075 107 bekannt.

Versuche haben gezeigt, dass der erst nach der Nachzerkleinerung erfolgende Reinigungsschritt die Qualität und Ausbeute der sich anschließenden Verfahrensschritte zur Hell- und Dunkeltrennung, zur sortenreinen Trennung von PE und PP und zur Farbtrennung deutlich erhöht und zur Minimierung von Verlusten beiträgt. Gleichzeitig trägt der erst nach der Nachzerkleinerung erfolgende Reinigungsschritt zur Kostensenkung des erfindungsgemäßen Verfahrens bei, da in diesem Reinigungsschritt ausreichend gereinigtes Kunststoffmaterial für alle sich anschließenden Verfahrensschritte bereitgestellt wird und kein weiterer oder zusätzlicher Reinigungsschritt nötig ist. Das Verfahren ist auf Grund des geringen Wasserverbrauches ressourcenschonend und besonders umweltfreundlich.

Für die Weiterverarbeitung im nächsten Verfahrensschritt müssen die nachzerkleinerten Kunststoffteilchen getrocknet werden. Zur Trocknung kann prinzipiell jedes herkömmliche thermische oder mechanische Trocknungsverfahren verwendet werden, das für die Trocknung von Kunststoffen, insbesondere Polyolefinen geeignet ist.

Die gereinigten und getrockneten Kunststoffteilchen, die nach der Nachzerkleinerung eine Größe von 1-25 mm aufweisen, werden in einem nächsten Verfahrensschritt einer Größenseparation unterzogen. Prinzipiell sind alle konventionellen Vorrichtungen für die Größenseparation geeignet. Vorzugsweise werden für die Größenseparation ein oder mehrere Siebe verwendet. Im erfindungsgemäßen Verfahren wird zunächst mit einem ersten Sieb das Unterkorn mit einer Teilchengröße von <5 mm im Durchmesser abgetrennt. In einem zweiten Sieb erfolgt die Abtrennung des Sollkorns mit einer Teilchengröße von 5-20 mm im Durchmesser, vorzugsweise 5-15 mm im Durchmesser. Das Überkorn mit einer Teilchengröße von >20 mm Durchmesser und das Unterkorn werden gesammelt und in einem herkömmlichen Verfahren als Gemisch bestehend aus PE und PP granuliert und in Regranulat überführt. Dadurch wird sichergestellt, dass nur geringe Mengen der gereinigten Kunststoffteilchen in dem erfindungsgemäßen Verfahren verloren gehen. Das erfindungsgemäße Verfahren ist somit besonders wirtschaftlich.

Das Sollkorn mit einer Teilchengröße im Bereich von 5-20 mm, vorzugsweise 5-15 mm im Durchmesser, wird in den nächsten Verfahrensschritt überführt, in dem eine Hell-Dunkel-Sortierung erfolgt. Schwarze und sehr dunkle Kunststoffteilchen können Infrarotstrahlen nicht oder nur ungenügend reflektieren. Je dunkler die Kunststoffteilchen sind, desto höher ist der Anteil der Infrarotstrahlung, der von den Kunststoffteilchen absorbiert wird. Dies wirkt sich nachteilig auf den nachfolgenden Verfahrensschritt der sortenreinen Trennung von PE und PP aus, der mittels Infrarotspektroskopie durchgeführt wird. Deshalb werden dunkle Kunststoffteile, vorzugsweise schwarze Kunststoffteile, vor der PE-PP-Sortentrennung aussortiert. Die so aussortierten dunklen Kunststoffteilchen werden in einem herkömmlichen Verfahren als Gemisch bestehend aus PE und PP granuliert und zu Regranulat weiter verarbeitet. Dadurch werden die Verluste an dem eingetragenen Ausgangsmaterial möglichst gering gehalten und das erfindungsgemäße Verfahren ist besonders wirtschaftlich.

Zur Hell-Dunkel-Unterscheidung kommen visuelle Methoden oder spektroskopische Methoden zum Einsatz. Besonders bevorzugt ist der Einsatz von Kameras, wie zum Beispiel von Farbkameras. Das nach der Abtrennung der dunklen Kunststoffteilchen erhaltene Gemisch aus den hellen Kunststoffteilchen umfasst Teilchen mit einer Teilchengröße zwischen 5-20 mm, vorzugsweise 5-15 mm im Durchmesser, und ist ein Gemisch von Kunststoffteilchen aus PE und PP aller Farben, außer den aussortierten dunklen Farben, wie zum Beispiel dunkelbraun, dunkelblau, dunkelgrau, dunkelrot und schwarz, vorzugsweise außer schwarz.

Das Gemisch aus den hellen Kunststoffteilchen wird in den nächsten Verfahrensschritt überführt, in dem PE und PP sortenrein getrennt werden. Zur Erkennung der unterschiedlichen Kunststoffarten kommen spektroskopische Methoden zum Einsatz, nämlich die Nah-Infrarot Spektroskopie. Vorzugsweise werden in einem ersten Schritt alle Kunststoffteilchen bestehend aus PP abgetrennt. Aus dem verbleibenden Kunststoffgemisch werden in einem zweiten Schritt alle Kunststoffteilchen aus PE abgetrennt. In einer anderen Ausführungsform des erfindungsgemäßen Verfahrens werden im ersten Schritt alle Kunststoffteilchen aus PE und im zweiten Schritt alle Kunststoffteilchen aus PP abgetrennt. Die sortenreinen PE- und PP-Chargen werden gesammelt und können in einem herkömmlichen Prozess granuliert und zu sortenreinem PE-Regranulat bzw. PP-Regranulat verarbeitet werden.

Die sortenreine Trennung der PE- und PP-Kunststoffteilchen erfolgt mit der Nah-Infrarot Spektroskopie derart, dass eine Nah-Infrarot Kamera die einzelnen Kunststoffteilchen mehrfach erfasst und die entsprechende Kunststoffart anhand des Infrarotspektrums identifiziert. Kunststoffteilchen, die in diesem Verfahrensschritt nicht eindeutig als PE oder PP identifiziert werden können, werden als Restcharge gesammelt und in einem herkömmlichen Verfahren als Gemisch bestehend aus PE und PP granuliert und zu Regranulat weiter verarbeitet. Bei Vorliegen eines hohen Anteils an Verunreinigungen kann diese Restcharge alternativ auch einer zurückgeführt und einem erneuten Verfahrensdurchlauf unterzogen werden. Damit erfolgt auch in diesem Verfahrensschritt eine Minimierung der Verluste an den gewünschten Kunststoffen.

Optional können die sortenreinen PE- und PP-Chargen vor der Weiterverarbeitung noch nach Farben aufgetrennt werden. Dazu werden die sortenreinen PE- und PP-Chargen in einen nächsten Verfahrensschritt überführt, in dem die Kunststoffteilchen nach Farben sortiert werden. Mit dem erfindungsgemäßen Verfahren ist es möglich, Kunststoffteilchen jeder beliebigen Farbe zu sortieren und zu separieren. Besonders bevorzugt ist die separate Sammlung von blauen, grünen und roten Kunststoffteilchen. Zur Farberkennung kann jede herkömmliche Technik und Erkennungsmethode in dem erfindungsgemäßen Verfahren eingesetzt werden. Vorzugsweise kommt zur Farberkennung eine Farbkamera zum Einsatz. Weiterhin bevorzugt ist der Einsatz von spektroskopischen Methoden, wie der Nah-Infrarot Spektroskopie mit Farbsensoren zur Material und Farberkennung. Das erfindungsgemäße Verfahren ermöglicht somit die sortenreine Gewinnung von PE-Chargen und PP-Chargen jeder beliebigen Farbe, vorzugsweise in den Farben blau, rot und grün. Die so erhaltenen Farbchargen können in einem herkömmlichen Verfahren weiter granuliert und zu Regranulat verarbeitet werden. Die nach der Farbtrennung übrig bleibenden Kunststoffteilchen der jeweiligen PE-Chargen und PP-Chargen, die nicht die gewünschten Farben aufweisen, werden als sortenreine PE-Chargen oder PP-Chargen, aber als Farbgemisch, ebenfalls in einem herkömmlichen Verfahren granuliert und zu Regranulat weiter verarbeitet. Damit werden auch in diesem Verfahrensschritt die Verluste an Ausgangsmaterial möglichst minimal gehalten und das Verfahren ist insgesamt besonders wirtschaftlich.

Das erfindungsgemäße Verfahren weist mehrere Vorteile gegenüber den aus dem Stand der Technik bekannten Verfahren auf. Das erfindungsgemäße Verfahren ist besonders wirtschaftlich, da von den als Ausgangsstoff eingesetzten Polyolefinen mehr als 60 %, vorzugsweise mehr als 70 %, mehr als 75 %, besonders bevorzugt mehr als 80 %, mehr als 85 % oder mehr als 90% in Regranulat als Endprodukt überführt werden können. Das erfindungsgemäße Verfahren ist besonders umweltschonend, da der überwiegende Teil der als Ausgangsstoff eingesetzten Polyolefine rezyklisiert wird und weniger Reste und Abfälle entstehen, die einer anderweitigen Verwertung und/oder Entsorgung zugeführt werden müssen. Zudem umfasst das erfindungsgemäße Verfahren nur einen einzigen, der Hell-Dunkel-Trennung, der PE- und PP-Sortentrennung und der Farbtrennung vorgelagerten Reinigungsschritt, wodurch nur geringe und unbedingt notwendige Mengen an Reinigungsmedium, vorzugsweise Wasser, eingesetzt werden müssen. Das Reinigungsmedium kann außerdem im Kreislauf in das Verfahren zurückgeleitet werden.

Für Gemische aus den Kunststoffen PE und PP können nur relativ geringe Erlöse erzielt werden. Für sortenreine Regranulate lassen sich dagegen relative hohe Erlöse erzielen, welche sich am Neuwarenpreis ausrichten. Dies gilt insbesondere auch für sortenreine und farbenreine Regranulate, besonders bevorzugt in den Farben rot, blau und grün. Infolgedessen ist es wirtschaftlich interessant, derartige Gemische in einem ressourcen- und umweltschonenden Verfahren trennen zu können.

Ein Verfahren umfasst die folgenden Schritte:
a) Zerkleinerung des anfallenden Kunststoffgemischs, vorzugsweise auf eine Teilchengröße von 1 bis 120 mm;
b) Abtrennung von anhaftendem Schmutz, Störstoffen und Metallteilen;
   ba) Rückgewinnung von in dem Störstoffgemisch noch enthaltenen gewünschten Kunststoffarten Polyethylen und Polypropylen und Rückführung in den nachfolgenden Prozess;
c) Abtrennung der gewünschten Kunststoffarten Poylethylen und Polypropylen aus dem anfallenden Kunststoffgemisch mittels Dichtetrennung;
d) Nachzerkleinerung der abgetrennten gewünschten Kunststoffarten Poylethylen und Polypropylen, vorzugsweise auf eine Größe von 1-25 mm;
e) Reinigung und Trocknung der nachzerkleinerten Kunststoffteilchen;
f) Größenseparation der der nachzerkleinerten und gereinigten Kunststoffteilchen;
   fa) Abtrennung des Sollkorns mit einer Teilchengröße von 5-20 mm im Durchmesser;
   fb) Sammeln des Überkorns mit einer Teilchengröße von >20 mm Durchmesser und das Unterkorns mit einer Teilchengröße von <5 mm Durchmesser und Herstellung von Regranulat daraus als Gemisch bestehend aus Polyethylen und Polypropylen;
g) Hell-Dunkel-Sortierung;
   ga) Sammeln der dunklen Kunststoffteilchen als Gemisch von Poylethylen und Polypropylen;
   gb) Weiterverarbeiten des Gemischs aus dunklen Kunststoffteilchen von Poylethylen und Polypropylen zu Regranulat;
h) Sortenreine Trennung der hellen Kunststoffteilchen in Polyethylen und Polypropylen,
   ha) Herstellung von sortenreinem Polyethylen-Regranulat und von sortenreinem Polypropylen-Regranulat als Gemisch der hellen Kunststoffteilchen;
      oder wahlweise
   hb) Sortenreine Trennung von Polyethylen und/oder Polypropylen in verschiedenen Farben und Herstellung von Regranulaten;
   hc) Herstellung von sortenreinen Polyethylen- und/oder Polypropylen-Regranulaten in verschiedenen Farben; und
   hd) Herstellung von Regranulaten aus den nach der Farbtrennung übrig bleibenden Kunststoffteilchen der jeweiligen Polyethylen-Chargen und Polypropylen-Chargen, die nicht die gewünschten Farben aufweisen, als sortenreine Polyethylen-Regranulate oder Polypropylen-Regranulate jeweils als Farbgemisch.

In einer ganz besonders bevorzugten Ausführungsform werden die Schritte des erfindungsgemäßen Verfahrens in der zuvor genannten Reihenfolge durchgeführt.

Die Erfindung betrifft weiterhin eine Vorrichtung zur Durchführung des erfindungsgemäßen Verfahrens nach Anspruch 10.

Weitere Einzelheiten und vorteilhafte Ausgestaltungen der Erfindung sind der nachfolgenden Beschreibung zu entnehmen, an Hand derer die in den Figuren dargestellte Ausführungsform der Vorrichtung näher beschrieben und erläutert ist.

Es zeigen:
Fig. 1 eine Vorrichtung zur sortenreinen Trennung von PE und PP von oben,
Fig. 2 Sortiervorrichtungen für die Hell-Dunkel-Sortierung von Kunststoffteilchen von oben.
Figur 3 eine Beispiel für den Massenstrom bei Anwendung des erfindungsgemäßen Verfahrens in der erfindungsgemäßen Vorrichtung.

Der allgemeine Aufbau der erfindungsgemäßen Vorrichtung umfasst einen Vorratsbehälter (1), einen Aufgabe-Dosierbunker (2), ein oder mehrere, vorzugsweise zwei oder drei Sortiervorrichtungen für die Hell-Dunkel-Sortierung von Kunststoffteilchen (3), eine Sortiervorrichtung für die sortenreine Abtrennung von Polypropylen (PP) (4), eine Sortiervorrichtung für die sortenreine Abtrennung von Polyethylen (PE) (5) und optional eine Sortiervorrichtung für die Sortierung von sortenreinem PE oder sortenreinem PP nach verschiedenen Farben (6). Der Vorratsbehälter (1) dient der Aufnahme der im ersten Verfahrensschritt gewonnenen vorzerkleinerten und gereinigten Polyolefine mit einer Teilchengröße im Bereich von 1-25 mm Durchmesser. Das erfindungsgemäße Verfahren wird vorzugsweise mit Kunststoffteilchen durchgeführt, die eine Sollkorngröße im Bereich von 5-20 mm Durchmesser, besonders bevorzugt im Bereich 5-15 mm Durchmesser aufweisen. Das Sollkorn wird mittels der Siebe (7) und (8) gewonnen. Mit dem Sieb (7) wird Unterkorn mit einem Durchmesser <5 mm abgetrennt. Mit dem Sieb (8) wird das Sollkorn mit einer Teilchengröße von 5-20 mm im Durchmesser abgetrennt. Das Überkorn mit einer Teilchengröße >20 mm im Durchmesser wird nach Passage der Siebe (7) und (8) separat gesammelt. Das Unterkorn und das Überkorn werden in einem herkömmlichen Verfahren weiterverarbeitet und in Regranulat überführt. Bei diesem Regranulat handelt es sich um eine Mischung aus PE und PP.

Das Sollkorn wird in der erfindungsgemäßen Vorrichtung weiter gemäß dem erfindungsgemäßen Verfahren behandelt. Der Transport der Kunststoffteilchen zwischen den einzelnen Anlagenteilen erfolgt entweder über Trogschnecken (9), Rohrschnecken (10) und entsprechende Rutschen (11) und Becherwerke (12) mit entsprechenden Rutschen (11). Die Becherwerke werden mit einem am Kopfende angebrachten Motor angetrieben. Die Becherwerke haben insbesondere den Vorteil, dass beim Transport der Kunststoffteilchen keine Verstopfungen auftreten können. Die Zuführung der Kunststoffteilchen zu den Becherwerken (12) nach Passage der Sortiervorrichtungen (3), (4) und (5) erfolgt mit Transportbändern (13). Die sortenrein und optional auch farbenrein getrennten Kunststoffchargen werden an den Abfüllstationen (14) in geeignete Transportbehälter abgefüllt.

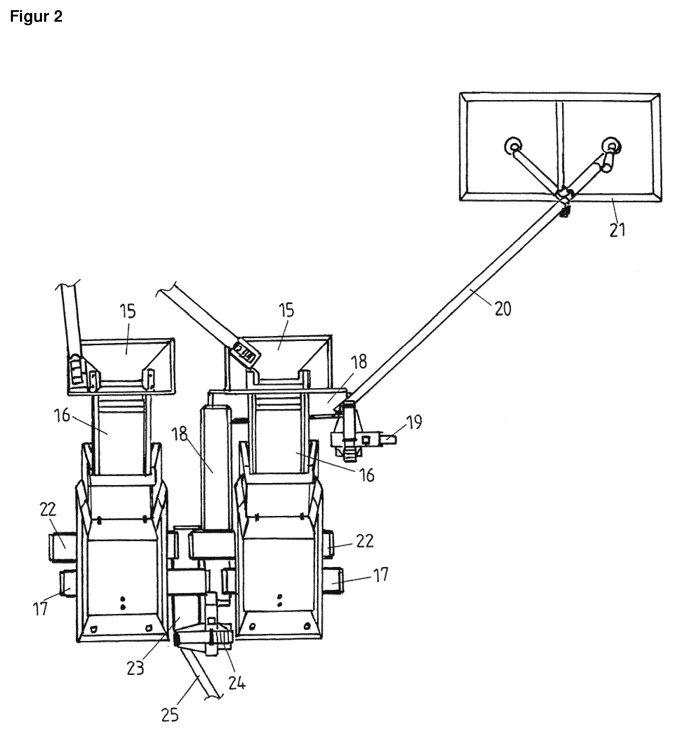

Der prinzipielle Aufbau einer Sortiervorrichtung ist am Beispiel der Sortiervorrichtung (3) in Figur 2 dargestellt. Die Sortiereinrichtungen (3), (4) und (5) weisen einen trichterförmigen Vorratsbehälter (15), ein Transportband (16) und eine Detektionseinheit, vorzugsweise eine Kamera (nicht dargestellt) auf. Der trichterförmige Dosierbehälter dient der Aufnahme der zu trennenden Kunststoffteilchen. Die Kunststoffteilchen werden mit dem Transportband (16) zur Detektionseinheit transportiert. Die Geschwindigkeit des Transportbandes (16) wird dabei so geregelt, dass ein für die nachfolgende Trennung optimaler Abstand zwischen den Kunststoffteilchen erreicht wird. Insbesondere zu dicht liegende Teilchen wirken sich negativ auf das Sortierergebnis und die Sortenreinheit der gewünschten Kunststoffchargen aus. Die Teilchendichte auf dem Transportband wird dabei mittels der in die Sortiervorrichtungen integrierten Kamera erfasst. Die mit der Kamera erfassten Daten werden von einem Computerprogramm, das auf einer Steuereinheit installiert ist, verarbeitet, die die Geschwindigkeit des Transportbandes (16) entsprechend regelt. Bei der Steuereinheit handelt es sich beispielsweise um einen Steuercomputer oder um einen Prozessrechner.

Das Detektionssystem ist in den einzelnen Sortiervorrichtungen unterschiedlich ausgestaltet. Die Sortiervorrichtungen (3) verfügen über ein visuelles Detektionssystem, zum Beispiel eine Farbkamera. Die Sortiervorrichtungen (4) und (5) verfügen über ein spektroskopisches Detektionssystem, zum Beispiel eine Nah-Infrarot Kamera für die Erkennung der Kunststoffarten PE und PP. Die Sortiereinrichtung (6) verfügt entweder über ein visuelles Detektionssystem, wie zum Bespiel eine Farbkamera, oder ein spektrometrisches Detektionssystem, zum Beispiel eine Nah-Infrarot Kamera für Farberkennung.

Die Sortieraufgaben für die einzelnen Sortiervorrichtungen (3), (4), (5) und (6) sind ebenfalls unterschiedlich. In den Sortiervorrichtungen (3) erfolgt die Abtrennung von dunklen Kunststoffteilchen von den Kunststoffteilchen hellerer Farben. Vorzugsweise werden mit den erfindungsgemäßen Sortiervorrichtungen (3) dunkelblaue, dunkelgrüne, dunkelbraune, dunkelgraue, dunkelrote und schwarze Kunststoffteilchen abgetrennt. In einer besonders bevorzugten Ausführungsform erfolgt die Abtrennung von schwarzen Kunststoffteilchen. Die dunklen Kunststoffteilchen gelangen über das Transportband (17) und die Transportbänder (18) zu dem Becherwerk (19) und über die Rutsche (20) in die Abfüllstationen (21). Die Kunststoffteilchen mit helleren Farben gelangen über die Transportbänder (22) und (23) zum Becherwerk (24) und über die Rutsche (25) in den Vorratsbehälter der nachfolgenden Sortiereinrichtung (4).

In einer bevorzugten Ausführungsform kann die Position der Transportbänder (17) und (22) der Sortiereinrichtungen (3) verändert werden. Dadurch kann die Sortieraufgabe der Sortiereinrichtungen (3) je nach Anteil der schwarzen Kunststoffteilchen am Kunststoffgemisch individuell festgelegt und gesteuert werden.

Vorzugsweise werden mit den erfindungsgemäßen Sortiervorrichtungen (3) dunkle oder schwarze Kunststoffteilchen mittels Druckluftdüsen abgetrennt, da der Anteil der dunklen oder schwarzen Kunststoffteilchen am gesamten Kunststoffgemisch normalerweise geringer ist als der Anteil der hellen Kunststoffteilchen. Die Sortierung führt aber dann zu ungenauen Ergebnissen und zu Materialverlusten, wenn der Anteil der dunklen und schwarzen Kunststoffteilchen auf >50%, insbesondere >60% oder >70% ansteigt.

Vorzugsweise wird in diesen Fällen die Sortieraufgabe der Sortiereinrichtungen (3) geändert und es werden dann die helleren Kunststoffteilchen mittels Druckluftdüsen aus dem Kunststoffgemisch abgetrennt. Die in den Sortiereinrichtungen (3) integrierten Farbkameras sind in der Lage, Kunststoffteilchen aller Farben zu erkennen und werden auf die Erkennung hellerer Kunststoffteilchen eingestellt. Die Stellung der Transportbänder (17) und (22) wird dann so umgestellt, dass die geänderte Sortieraufgabe technisch umgesetzt werden kann.

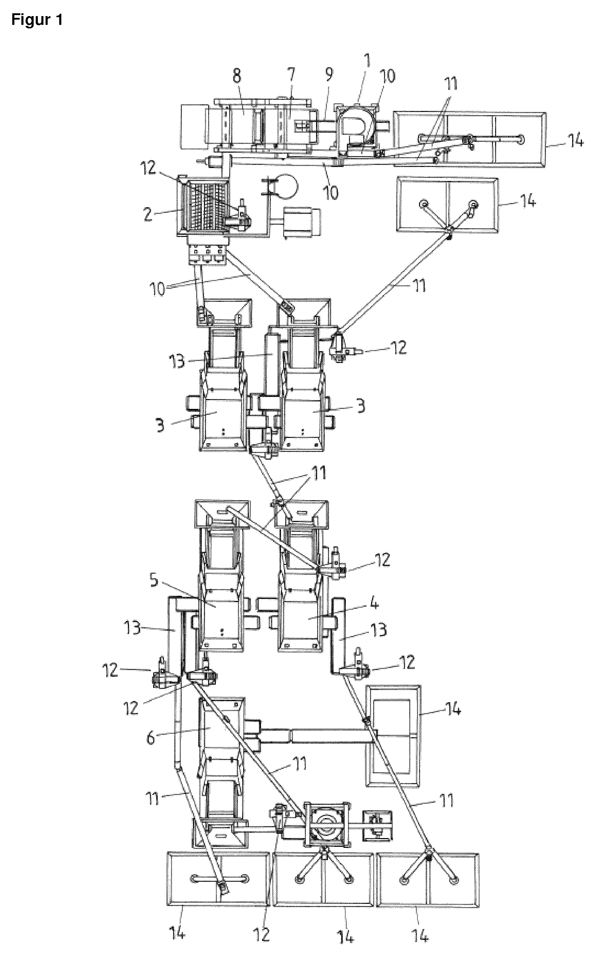

Nach Durchlaufen der erfindungsgemäßen Vorrichtung werden sortenreines PE und sortenreines PP erhalten. Die sortenreinen PE- und PP-Chargen werden in den Abfüllstationen (14) (Figur 1) zur Weiterverarbeitung abgefüllt. Optional können die sortenreinen PE- und PP-Chargen über die Sortiereinrichtung (6) geführt werden, in der die sortenreinen Kunststoffchargen noch weiter nach verschiedenen Farbe aufgetrennt werden können. Mit der erfindungsgemäßen Vorrichtung ist prinzipiell möglich, Kunststoffchargen jeder beliebigen Farbe herzustellen. Bevorzugt ist die Herstellung von grünen, blauen und roten Kunststoffchargen.

Der Massenstrom bei Anwendung des erfindungsgemäßen Verfahrens in der erfindungsgemäßen Vorrichtung wird nachstehend an einem Ausführungsbeispiel näher erläutert.

### Ausführungsbeispiel 1: Massenstrom bei Anwendung des erfindungsgemäßen Verfahrens in der erfindungsgemäßen Vorrichtung

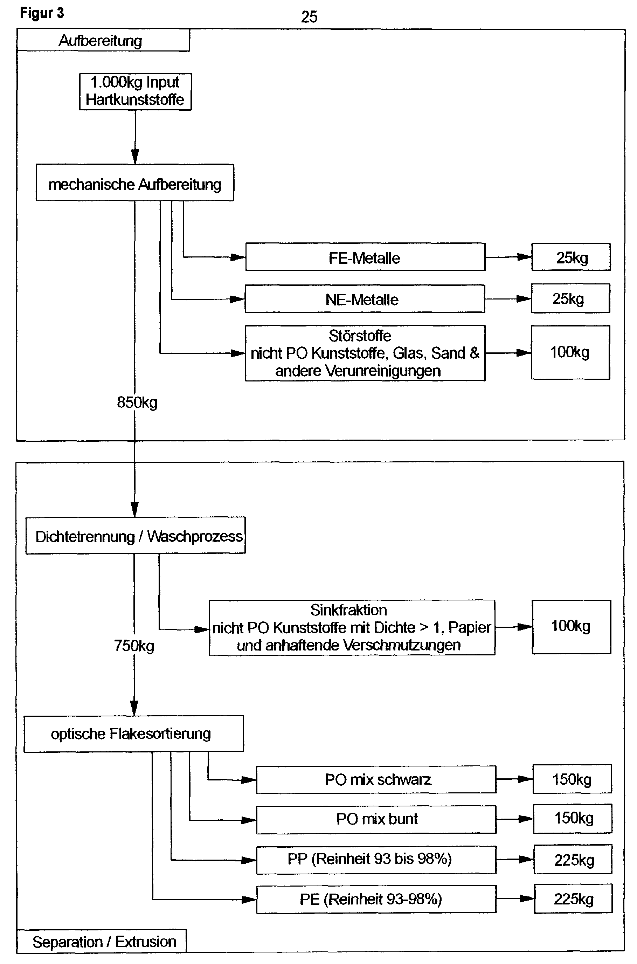

Figur 3 zeigt den typischen Massenstrom bei Anwendung des erfindungsgemäßen Verfahrens in der erfindungsgemäßen Vorrichtung pro 1.000 kg eines Gemisches von Kunststoffabfällen, die Hartkunststoffe enthalten.

Das Gemisch aus Kunststoffabfällen wird zunächst einer mechanischen Aufbereitung unterzogen. Als erster Schritt erfolgt eine Zerkleinerung der eingesetzten Kunststoffabfälle. Die dadurch erhaltenen Teilchen des Abfallgemischs weisen eine Größe von 1-120 mm auf. Aus diesem zerkleinerten Abfallgemisch werden zunächst Eisenmetalle (ca. 25 kg), Nichteisenmetalle (ca. 25 kg) und ca. 100 kg andere Störstoffe, wie Glas, Sand, unerwünschte Kunststoffe sowie weitere Verunreinigungen auf herkömmliche Weise abgetrennt. Als unerwünschte Kunststoffe wurden in diesem Schritt insbesondere Kunststoffe abgetrennt, die nicht auf Polyolefinen basieren. Nach der mechanischen Aufbereitung werden etwa 850 kg des zerkleinerten Abfallgemischs zunächst einer Nachzerkleinerung unterzogen und dann zur Weiterverarbeitung in die nächsten Verfahrensschritte überführt.

Anschließend erfolgt die Separation der gewünschten Kunststoffarten, d.h. der Polyolefine Polyethylen und Polypropylen aus dem nachzerkleinerten Abfallgemisch. Dazu werden die nachzerkleinerten Kunststoffabfälle zunächst einer Dichtetrennung in Wasser unterzogen. Bei dieser Dichtetrennung bildet sich eine Sinkfraktion, die unerwünschte Kunststoffarten, d.h. Kunststoffarten mit einer Dichte > 1 sowie andere Störstoffe, wie Papier, anhaftende Verschmutzungen usw. enthält. Diese Sinkfraktion umfasst ca. 100 kg und wird abgetrennt.

Die verbliebenen etwa 750 kg der Kunststoffabfälle umfassen zum größten Teil nur noch die erwünschten Kunststoffarten Polyethylen und Polyproplyen. Die auf diese Art und Weise separierten Kunststoffteilchen werden gereinigt, aus dem Reinigungsmedium abgetrennt und getrocknet.

Die gereinigten und getrockneten Kunststoffteilchen (Flaks) durchlaufen danach die optische Sortierung in den Sortiervorrichtungen (3), (4), und (5). Nach Durchlaufen dieser Sortiervorrichtungen wurden pro 1.000 kg eingesetzter Kunststoffabfälle ca. 150 kg Polyolefingemisch dunkler Farbe (PO Mix schwarz), ca. 150 kg Polyolefingemisch der Farben rot, blau und grün (PO Mix bunt), ca. 225 kg reines Polypropylen (PP) und ca. 225 reines Polyethylen (PE) erhalten. Die PP-und PE-Fraktionen wiesen eine Reinheit von jeweils 93 bis 98 % bezogen auf die jeweils gewünschte Kunststoffart auf.

Die erhaltenen Fraktionen PO Mix schwarz, PO Mix bunt, PP und PE wurden anschließend extrudiert und granuliert.

### Bezugszeichenliste

- 1: Vorratsbehälter
- 2: Aufgabe-Dosierbunker
- 3: Sortiervorrichtungen für die Hell-Dunkel-Sortierung
- 4: Sortiervorrichtung für die sortenreine Abtrennung von PP
- 5: Sortiervorrichtung für die sortenreine Abtrennung von PE
- 6: Sortiervorrichtung für die Sortierung von sortenreinem PE oder sortenreinem PP nach verschiedenen Farben
- 7: Sieb für Unterkorn
- 8: Sieb für Sollkorn
- 9: Trogschnecken
- 10: Rohrschnecken
- 11: Rutschen
- 12: Becherwerke
- 13: Transportbänder
- 14: Abfüllstationen
- 15: Trichterförmiger Vorratsbehälter
- 16: Transportband
- 17: Transportband
- 18: Transportband
- 19: Becherwerk
- 20: Rutsche
- 21: Abfüllstation
- 22: Transportband
- 23: Transportband
- 24: Becherwerk
- 25: Rutsche

## Patentansprüche

1. Verfahren zur sortenreinen Trennung von Kunststoffen, die eine ähnliche Dichte aufweisen, aus anfallenden Kunststoffabfällen umfassend die Schritte:
• Abtrennung der gewünschten Kunststoffarten aus dem anfallenden Kunststoffgemisch,
• Reinigung und Trocknung,
• Größenseparation,
• Hell-Dunkel-Sortierung, mittels visueller oder spektroskopischer Methoden,
• Sortenreine Trennung der gewünschten Kunststoffarten aus den hellen Kunststoffteilchen,
• Granulierung und Herstellung von Regranulaten,
wobei die gewünschten Kunststoffarten, die eine ähnliche Dichte aufweisen, Polyolefine sind, **dadurch gekennzeichnet, dass** die sortenreine Trennung der PE und PP Kunststoffteilchen mittels Nah-Infrarot Spektroskopie erfolgt, und in einem ersten Schritt alle Kunststoffteilchen aus PE und in einem zweiten Schritt alle Kunststoffteilchen aus PP abgetrennt werden oder in einem ersten Schritt alle Kunststoffteilchen aus PP und in einem zweiten Schritt alle Kunststoffteilchen aus PE abgetrennt werden.

2. Verfahren nach Anspruch 1, **dadurch gekennzeichnet dass** die gewünschten Kunststoffarten aus dem anfallenden Kunststoffgemisch mittels Dichtetrennung in Flüssigkeiten gewonnen werden.

3. Verfahren nach Anspruch 1 oder 2, **dadurch gekennzeichnet dass** die gewünschten Kunststoffarten nach der Abtrennung aus dem anfallenden Kunststoffgemisch nachzerkleinert werden.

4. Verfahren nach mindestens einem der vorigen Ansprüche, **dadurch gekennzeichnet, dass** die nachzerkleinerten Kunststoffteilchen gereinigt, aus dem Reinigungsmedium abgetrennt und getrocknet werden.

5. Verfahren nach mindestens einem der vorigen Ansprüche, **dadurch gekennzeichnet, dass** die Polyolefine Polyethylen (PE) und Polypropylen (PP) sortenrein hergestellt werden.

6. Verfahren nach mindestens einem der vorigen Ansprüche, **dadurch gekennzeichnet, dass** bei der Größenseparation ein Sollkorn der Kunststoffteilchen mit einer Größe von 5-20 mm im Durchmesser, vorzugsweise 5-15 mm im Durchmesser, abgetrennt wird und dass nach der Größenseparation das Unterkorn und das Überkorn gesammelt und als Gemisch aus PE und PP zur Regranulat weiterverarbeitet werden.

7. Verfahren nach mindestens einem der vorigen Ansprüche, **dadurch gekennzeichnet, dass** die nach der Hell-Dunkel-Sortierung anfallenden dunklen Kunststoffteilchen gesammelt und als Gemisch aus PE und PP zu Regranulat weiter verarbeitet werden.

8. Verfahren nach mindestens einem der vorigen Ansprüche, **dadurch gekennzeichnet, dass** sortenreines PE-Regranulat und/oder sortenreines PP-Regranulat hergestellt wird.

9. Verfahren nach mindestens einem der vorigen Ansprüche, **dadurch gekennzeichnet, dass** in einem weiteren Verfahrensschritt sortenreines PE und/oder sortenreines PP in verschiedenen Farben herstellt wird.

10. Vorrichtung zur sortenreinen Trennung von Kunststoffen, die eine ähnliche Dichte aufweisen, aus anfallenden Kunststoffabfällen, umfassend einen Vorratsbehälter (1) für die Aufnahme von vorzerkleinerten und gereinigten Kunststoffteilchen mit einer Teilchengröße im Bereich von 1-25 mm Durchmesser, die Siebe (7) und (8) für die Gewinnung des Sollkorns und die Abtrennung des Unterkorns und des Überkorns, einen Aufgabe-Dosierbunker (2) für die Speicherung des Sollkorns, **dadurch gekennzeichnet, dass** die Vorrichtung weiterhin umfasst: ein oder mehrere Sortiervorrichtungen (3) für die Hell-Dunkel-Sortierung von Kunststoffteilchen aus dem Sollkorn mittels eines visuellen Detektionssystems, eine Sortiervorrichtung (4) für die sortenreine Abtrennung von PP aus den hellen Kunststoffteilchen mittels eines Nah-Infrarot Spektroskopie Detektionssystems, eine Sortiervorrichtung (5) für die sortenreine Abtrennung von PE aus den hellen Kunststoffteilchen mittels eines Nah-Infrarot Spektroskopie Detektionssystems, optional eine Sortiervorrichtung (6) für die Sortierung von sortenreinem PE oder sortenreinem PP nach verschiedenen Farben und Abfüllstationen (14) für die Abfüllung der abgetrennten Kunststoffchargen in geeignete Transportbehälter.

11. Vorrichtung nach Anspruch 10, **dadurch gekennzeichnet dass** der Transport der Kunststoffteilchen zwischen den einzelnen Anlagenteilen über Trogschnecken (9), Rohrschnecken (10) und entsprechende Rutschen (11) und Becherwerke (12) mit entsprechenden Rutschen (11) erfolgt; dass die Zuführung der Kunststoffteilchen zu den Becherwerken (12) nach Passage der Sortiervorrichtungen (3), (4) und (5) mit Transportbändern (13) erfolgt und dass die Sortiereinrichtungen (3), (4) und (5) einen trichterförmigen Vorratsbehälter (15) für die Aufnahme der zu trennenden Kunststoffteilchen, ein Transportband (16) und eine Detektionseinheit aufweisen.

12. Vorrichtung nach einem der Ansprüche 10 oder 11, **dadurch gekennzeichnet dass** die Sortiereinrichtungen (3), (4) und (5) einen trichterförmigen Vorratsbehälter (15) für die Aufnahme der zu trennenden Kunststoffteilchen, ein Transportband (16) und eine Detektionseinheit aufweisen.

13. Vorrichtung nach Anspruch 12, **dadurch gekennzeichnet dass** die Geschwindigkeit des Transportbandes (16) so geregelt wird, dass ein für die nachfolgende Trennung optimaler Abstand zwischen den Kunststoffteilchen erreicht wird.

14. Vorrichtung nach mindestens einem der Ansprüche 10 bis 13, **dadurch gekennzeichnet dass** die Sortiereinrichtungen (3) mit einer Farbkamera ausgestattet sind, die Sortiereinrichtungen (4) und (5) mit einer Nah-Infrarot Kamera ausgestattet sind und die Sortiereinrichtung (6) mit einer Farbkamera oder einer Nah-Infrarot Kamera ausgestattet ist.

15. Vorrichtung nach mindestens einem der Ansprüche 10 bis 14, **dadurch gekennzeichnet dass** die Sortieraufgabe der Sortiereinrichtungen (3) in der Abtrennung von dunklen Kunststoffteilchen oder in der Abtrennung von hellen Kunststoffteilchen besteht.

16. Vorrichtung nach Anspruch 15, **dadurch gekennzeichnet dass** die Position der Förderbänder (17) und (22) der Sortiereinrichtungen (3) in Abhängigkeit der Sortieraufgabe veränderbar ist.

17. Verwendung der Vorrichtung nach mindestens einem der Ansprüche 10 bis 16 in einem Verfahren nach mindestens einem der Ansprüche 1 bis 9.

## Claims

1. Method for the type-specific separation of plastics that have a similar density from plastics waste occurring, comprising the steps of:
• segregating the desired types of plastic from the plastics mixture occurring,
• cleaning and drying,
• size separation,
• light-dark sorting, by means of visual or spectroscopic methods,
• type-specific separation of the desired types of plastic from the light plastic particles,
• granulation and production of reclaimed granules,
the desired types of plastic that have a similar density being polyolefins, **characterized in that** the type-specific separation of the PE and PP plastic particles takes place by means of near-infrared spectroscopy, and all of the plastic particles of PE are segregated in a first step and all of the plastic particles of PP are segregated in a second step, or all of the plastic particles of PP are segregated in a first step and all of the plastic particles of PE are segregated in a second step.

2. Method according to Claim 1, **characterized in that** the desired types of plastic are obtained from the plastics mixture occurring by means of density separation in liquids.

3. Method according to Claim 1 or 2, **characterized in that**, after being segregated from the plastics mixture occurring, the desired types of plastic are post-comminuted.

4. Method according to at least one of the preceding claims, **characterized in that** the post-comminuted plastic particles are cleaned, segregated from the cleaning medium and dried.

5. Method according to at least one of the preceding claims, **characterized in that** the polyolefins polyethylene (PE) and polypropylene (PP) are produced type-specifically.

6. Method according to at least one of the preceding claims, **characterized in that**, in the size separation, a desired grain of the plastic particles with a size of 5-20 mm in diameter, preferably 5-15 mm in diameter, is segregated and **in that**, after the size separation, the undersize and the oversize are collected and are further processed as a mixture of PE and PP to form reclaimed granules.

7. Method according to at least one of the preceding claims, **characterized in that** the dark plastic particles occurring after the light-dark sorting are collected and are further processed as a mixture of PE and PP to form reclaimed granules.

8. Method according to at least one of the preceding claims, **characterized in that** type-specific reclaimed PE granules and/or type-specific reclaimed PP granules are produced.

9. Method according to at least one of the preceding claims, **characterized in that**, in a further method step, type-specific PE and/or type-specific PP are produced in different colours.

10. Device for the type-specific separation of plastics that have a similar density from plastics waste occurring, comprising a storage container (1) for receiving precomminuted and cleaned plastic particles with a particle size in the range of 1-25 mm in diameter, the screens (7) and (8) for the obtainment of the desired grain and the segregation of the undersize and the oversize, a feed-metering bunker (2) for the storage of the desired grain, **characterized in that** the device also comprises: one or more sorting devices (3) for the light-dark sorting of plastic particles from the desired grain by means of a visual detection system, a sorting device (4) for the type-specific segregation of PP from the light plastic particles by means of a near-infrared spectroscopy detection system, a sorting device (5) for the type-specific segregation of PE from the light plastic particles by means of a near-infrared spectroscopy detection system, optionally a sorting device (6) for the sorting of type-specific PE or type-specific PP according to different colours and filling stations (14) for the filling of the segregated batches of plastic into suitable transporting containers.

11. Device according to Claim 10, **characterized in that** the transport of the plastic particles between the individual parts of the installation takes place by way of trough screw conveyors (9), tube screw conveyors (10) and corresponding slides (11) and bucket conveyors (12) with corresponding slides (11); **in that** the feeding of the plastic particles to the bucket conveyors (12) after passing the sorting devices (3), (4) and (5) takes place with transporting belts (13) and **in that** the sorting devices (3), (4) and (5) have a funnel-shaped storage container (15) for receiving the plastic particles to be separated, a transporting belt (16) and a detection unit.

12. Device according to either of Claims 10 and 11, **characterized in that** the sorting devices (3), (4) and (5) have a funnel-shaped storage container (15) for receiving the plastic particles to be separated, a transporting belt (16) and a detection unit.

13. Device according to Claim 12, **characterized in that** the speed of the transporting belt (16) is controlled such that an optimum distance between the plastic particles for the subsequent separation is achieved.

14. Device according to at least one of Claims 10 to 13, **characterized in that** the sorting devices (3) are equipped with a colour camera, the sorting devices (4) and (5) are equipped with a near-infrared camera and the sorting device (6) is equipped with a colour camera or a near-infrared camera.

15. Device according to at least one of Claims 10 to 14, **characterized in that** the sorting task of the sorting devices (3) comprises the segregation of dark plastic particles or the segregation of light plastic particles.

16. Device according to Claim 15, **characterized in that** the position of the conveyor belts (17) and (22) of the sorting devices (3) is variable in dependence on the sorting task.

17. Use of the device according to at least one of Claims 10 to 16 in a method according to at least one of Claims 1 to 9.

## Revendications

1. Procédé de séparation, par type, de plastiques qui ont une masse volumique semblable, à partir de déchets de plastiques produits, comprenant les étapes :
- séparation des types de plastiques souhaités du mélange de plastiques produit,
- nettoyage et séchage,
- séparation par classification,
- tri clair-foncé, par des méthodes visuelles ou spectroscopiques,
- séparation par type des espèces de plastiques souhaitées, à partir des particules plastiques claires,
- granulation et fabrication de regranulats,
les espèces de plastiques souhaitées présentant une masse volumique semblable étant des polyoléfines, **caractérisé en ce que** la séparation par type des particules de plastiques PE et PP est réalisée par spectroscopie dans l'infrarouge proche et, dans une première étape, on sépare toutes les particules plastiques de PE et dans une deuxième étape toutes les particules plastiques de PP, ou on sépare dans une première étape toutes les particules plastiques de PP et dans une deuxième étape toutes les particules plastiques de PE.

2. Procédé selon la revendication 1, **caractérisé en ce que** les espèces de plastiques souhaitées sont obtenues, à partir du mélange de plastiques produit, par séparation densimétrique dans des liquides.

3. Procédé selon la revendication 1 ou 2, **caractérisé en ce que** les espèces de plastiques souhaitées sont rebroyées après séparation d'avec le mélange de plastiques produit.

4. Procédé selon au moins l'une des revendications précédentes, **caractérisé en ce que** les particules plastiques rebroyées sont nettoyées, séparées du milieu de nettoyage, et séchées.

5. Procédé selon au moins l'une des revendications précédentes, **caractérisé en ce qu'**on fabrique par type les polyoléfines polyéthylène (PE) et polypropylène (PP).

6. Procédé selon au moins l'une des revendications précédentes, **caractérisé en ce que**, lors de la séparation par classification, on sépare les particules plastiques ayant une granulométrie de consigne correspondant à un diamètre de 5 à 20 mm, de préférence à un diamètre de 5 à 15 mm, et que, après séparation par classification, on regroupe le passé et le refus, et on le soumet à une post-transformation en regranulats, sous forme d'un mélange de PE et de PP.

7. Procédé selon au moins l'une des revendications précédentes, **caractérisé en ce que** les particules plastiques foncées produites lors du tri clair-foncé, sont regroupées et soumises à une post-transformation en un regranulat sous forme d'un mélange de PE et de PP.

8. Procédé selon au moins l'une des revendications précédentes, **caractérisé en ce qu'**on fabrique un regranulat de PE de type pur et/ou un regranulat de PP de type pur.

9. Procédé selon au moins l'une des revendications précédentes, **caractérisé en ce que**, dans une étape supplémentaire du procédé, on fabrique un PE de type pur et/ou un PP de type pur en différentes couleurs.

10. Dispositif pour la séparation, par type, de plastiques qui présentent une masse volumique semblable, à partir de déchets de plastiques produits, comprenant un réservoir (1) pour recevoir des particules plastiques prébroyées et nettoyées, ayant une granulométrie correspondant à un diamètre de 1 à 25 mm, les tamis (7) et (8) pour l'obtention des grains ayant la granulométrie de consigne et pour la séparation du passé et du refus, une trémie doseuse de charge (2) pour le stockage des grains ayant la granulométrie de consigne, **caractérisé en ce que** le dispositif comprend en outre : un ou plusieurs dispositifs de tri (3) pour le tri clair-foncé de particules plastiques à partir des grains ayant la granulométrie de consigne, à l'aide d'un système de détection visuelle, un dispositif de tri (4) pour la séparation par type du PP à partir des particules plastiques claires à l'aide d'un système de détection par spectroscopie dans l'infrarouge proche, un dispositif de tri (5) pour la séparation par type du PE à partir des particules plastiques claires à l'aide d'un système de détection par spectroscopie dans l'infrarouge proche, en option un dispositif de tri (6) pour le tri du PE de type pur ou du PP de type pur en fonction de différentes couleurs, et des stations de remplissage (14), pour remplir des récipients de transport appropriés avec les lots de plastique séparés.

11. Dispositif selon la revendication 10, **caractérisé en ce que** le transport des particules plastiques entre les différentes parties de l'installation a lieu par l'intermédiaire de vis à auges (9), de vis tubulaires (10), de glissières (11) et de transporteurs à godets (12) comportant des glissières (11) correspondantes ; que l'amenée des particules plastiques vers les transporteurs à godets (12) a lieu, après passage par les dispositifs de tri (3), (4) et (5), à l'aide de bandes transporteuses (13), et que les dispositifs de tri (3), (4) et (5) comprennent un réservoir (15) en forme d'entonnoir pour recevoir les particules plastiques à séparer, une bande transporteuse (16) et une unité de détection.

12. Dispositif selon l'une des revendications 10 ou 11, **caractérisé en ce que** les dispositifs de tri (3), (4) et (5) comprennent un réservoir (15) en forme d'entonnoir pour recevoir les particules plastiques à séparer, une bande transporteuse (16) et une unité de détection.

13. Dispositif selon la revendication 12, **caractérisé en ce que** la vitesse de la bande transporteuse (16) est régulée de façon à réaliser entre les particules plastiques un écartement optimal pour la séparation ultérieure.

14. Dispositif selon l'une des revendications 10 à 13, **caractérisé en ce que** les dispositifs de tri (3) sont équipés d'une caméra couleur, les dispositifs de tri (4) et (5) sont équipés d'une caméra infrarouge proche, et le dispositif de tri (6) est équipé d'une caméra couleur ou d'une caméra infrarouge proche.

15. Dispositif selon au moins l'une des revendications 10 à 14, **caractérisé en ce que** la tâche de tri des dispositifs de tri (3) consiste en la séparation des particules plastiques foncées et/ou en la séparation des particules plastiques claires.

16. Dispositif selon la revendication 15, **caractérisé en ce que** la position des bandes transporteuses (17) et (22) des dispositifs de tri (3) peut varier en fonction de la tâche de tri.

17. Utilisation du dispositif selon au moins l'une des revendications 10 à 16 dans un procédé selon au moins l'une des revendications 1 à 9.
